# EUROPÄISCHE PATENTANMELDUNG

(11) **EP 4 560 880 A1**
(43) Veröffentlichungstag der Anmeldung: **28.05.2025**
(21) Anmeldenummer: 23211050.2
(22) Anmeldetag: 21.11.2023
(51) Int. Cl.: H02K 1/14

(54) **STATORSEGMENT MIT SCHRÄGEN FLÄCHEN**

(71) Anmelder: Hilti Aktiengesellschaft, 9494 Schaan (LI)
(72) Erfinder: Dotz, Boris, 86937 Scheuring (DE); Ludwig, Wolfgang, 86874 Zaisertshofen (DE); Schaefer, Thomas, 86836 Obermeitingen (DE); Asmus, Torsten, 87600 Kaufbeuren (DE); Gerold, Johannes, 82418 Murnau (DE)
(74) Vertreter: Hilti Aktiengesellschaft Corporate Intellectual Property

(57) **Zusammenfassung**

Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Jede Zahneinrichtung enthält einen bogenförmigen Ringabschnitt und eine Verbindungsvorrichtung mit einem ersten und zweiten Verbindungselement, wobei das erste und zweite Verbindungselement korrespondierend keilförmig ausgestaltet sind, sodass in einem verbundenen Zustand eine erste schräg zu einer Zahnsegmentebene verlaufenden Anlagefläche des ersten Verbindungselements an einer zweiten schräg zu der Zahnsegmentebene verlaufenden Anlagefläche des zweiten Verbindungselements anliegt.

## Beschreibung

Die vorliegende Erfindung betrifft einen Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Statoren als ein Bestandteil für Elektromotoren gemäß dem Stand der Technik weisen im Wesentlichen ein Ringelement sowie ein Anzahl an Zahnelementen auf. Die Zahnelemente erstrecken sich dabei von einer inneren Mantelfläche des Ringelements zu einem Mittelpunkt des Ringelements. An den freien Ende der Zahnelemente verbleibt ein kreisförmiger Freiraum für einen Rotor. Jedes Zahnelement dient zum Aufnehmen und Halten einer Wickelspule auf leitfähigem Spulendraht zum entsprechenden Erzeugen eines Magnetfeldes.

Insbesondere bei kleinen Statoren ist die Umwicklung der einzelnen Zahnelemente mit einem Spulendraht für gewöhnlich mit einem hohen technischen Aufwand verbunden. Der zur Verfügung stehende Raum zwischen benachbarten Zahnelementen ist häufig eng bemessen, sodass eine schnelles und vor allem ordentliches Wickeln einer Spule um ein Zahnelement viel Zeit, eine aufwendige Wickelvorrichtung sowie hohe Kosten erzeugt.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Vorteilhafte Ausführungsformen des erfindungsgemäßen Gegenstands sind in den abhängigen Patentansprüchen enthalten.

Die Aufgabe wird insbesondere gelöst durch einen Stator für einen Elektromotor, insbesondere als Antrieb für eine Werkzeugmaschine, enthaltend wenigstens eine erste und zweite Zahneinrichtung mit jeweils einem radial angeordneten Stegelement zur Aufnahme einer Spulenwicklung.

Erfindungsgemäß ist vorgesehen, dass jede Zahneinrichtung einen bogenförmigen Ringabschnitt und eine Verbindungsvorrichtung mit einem ersten und zweiten Verbindungselement enthält, wobei das erste und zweite Verbindungselement korrespondierend keilförmig ausgestaltet sind, sodass in einem verbundenen Zustand eine erste schräg zu einer Zahnsegmentebene verlaufenden Anlagefläche des ersten Verbindungselements an einer zweiten schräg zu der Zahnsegmentebene verlaufenden Anlagefläche des zweiten Verbindungselements anliegt.

Die Passung kann auch als Pass- oder Passungsgenauigkeit verstanden werden.

Entsprechend einer weiteren vorteilhaften Ausführungsform kann es möglich sein, dass das erste und zweite Verbindungselement so ausgestaltet sind, dass eine Verbindungsfläche sowohl einen schräg zu der Zahnsegmentebene verlaufenden Abschnitt als auch radial verlaufenden Abschnitt aufweist.

Gemäß einer weiteren vorteilhaften Ausführungsform kann es möglich sein, dass der schräg zu der Zahnsegmentebene verlaufende Abschnitt länger ist als der radial verlaufende Abschnitt ist.

Entsprechend einer weiteren vorteilhaften Ausführungsform kann es möglich sein, dass das erste und zweite Verbindungselement so ausgestaltet ist, dass das erste und zweite Verbindungselement in einem verbundenen Zustand an einem radial nach außen ragenden Ende der Verbindungsfläche stoffschlüssig verbindbar sind.

Gemäß einer weiteren vorteilhaften Ausführungsform kann es möglich sein, dass die stoffschlüssige Verbindung zwischen dem ersten und zweiten Verbindungselement in Form einer Schweißverbindung ausgestaltet sind.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine schematische Seitenansicht auf eine Werkzeugmaschine mit einem Antrieb gemäß einer bespielhaften Ausführungsform;
- Figur 2: eine perspektivische Seitenansicht auf einen Stator und Rotor als Bestandteil des Antriebs;
- Figur 3: eine perspektivische Seitenansicht auf den Stator mit einer Anzahl an Zahneinrichtungen;
- Figur 4: eine Vorderansicht auf vier benachbarte Zahneinrichtungen mit einer Verbindungsvorrichtung enthaltend ein erstes und zweites Verbindungselement gemäß einer bevorzugten Ausführungsform; und
- Figur 5: eine Vorderansicht auf zwei Zahneinrichtungen mit der Verbindungsvorrichtung enthaltend ein erstes und zweites Verbindungselement gemäß der bevorzugten Ausführungsform in einem getrennten Zustand.

### Ausführungsbeispiele:

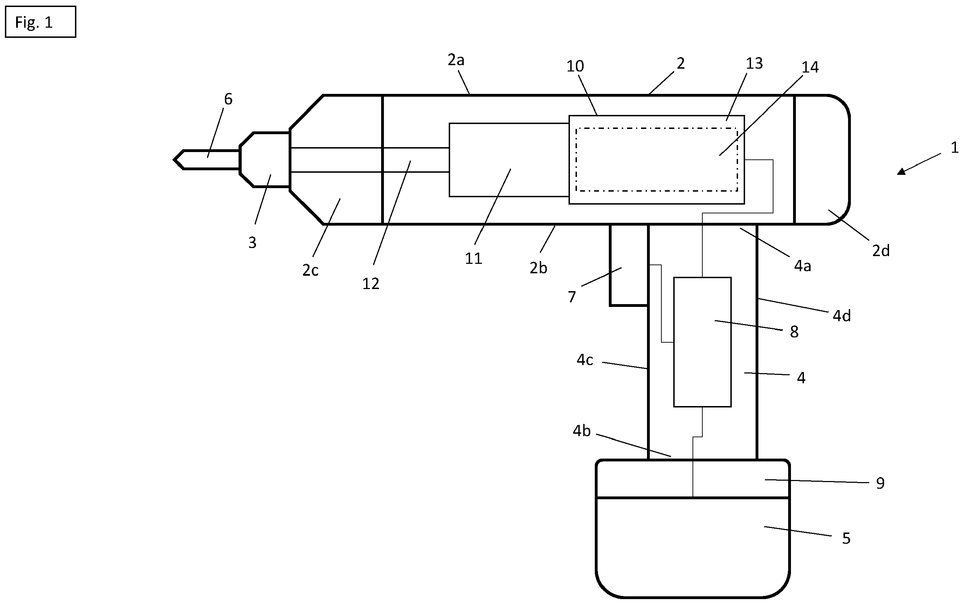

Figur 1 zeigt eine Werkzeugmaschine 1 in Form eines Akku-Schraubers gemäß einer bespielhaften Ausführungsform.

Alternativ kann die Werkzeugmaschine 1 auch in Form eines Bohrhammers, eines Kombihammers, einer Bohrmaschine, einer Säge, eines Schleifgeräts oder dergleichen ausgestaltet sein.

Wie in Figur 1 gezeigt, enthält die Werkzeugmaschine 1 gemäß der bespielhaften Ausführungsform im Wesentlichen ein Gehäuse 2, eine Werkzeugaufnahme 3, einen Handgriff 4 und eine Energieversorgung 5.

Das Gehäuse 2 weist eine Oberseite 2a, eine Unterseite 2b, ein vorderes Ende 2c und ein hinteres Ende 2d auf.

An dem vorderen Ende 2c des Gehäuses 2 ist die Werkzeugaufnahme 3 positioniert, die zum Aufnehmen und Halten eines Werkzeuges 6 dient. In dem vorliegenden Fall ist das Werkzeug 6 als Schrauber-Bit (oder nur Bit genannt) ausgestaltet.

Der Handgriff 4 dient zum Halten und Führen der Werkzeugmaschine 1 durch einen (in den Figuren nicht gezeigten) Anwender. Der Handgriff 4 weist ein oberes Ende 4a, ein unteres Ende 4b, eine Vorderseite 4c und eine Rückseite 4d auf. Das obere Ende 4a des Handgriffs 4 ist mit der Unterseite 2b des Gehäuses 2 der Werkzeugmaschine 1 verbunden.

Wie Figur 1 erkennbar, ist an der Vorderseite 4c des Handgriffs 4 ein Betätigungsschalter 7 positioniert. Der Betätigungsschalter 7 dient zum Aktivieren der Werkzeugmaschine 1.

Im Inneren des Handgriffs 4 ist eine Steuerungseinrichtung 8 der Werkzeugmaschine 1 positioniert und dient zum Steuem sowie Regeln der Funktionen der Werkzeugmaschine 1.

An der Unterseite 2b des Gehäuses 2 der Werkzeugmaschine 1 ist eine Fussvorrichtung 8 mit einer Werkzeugmaschinenschnittstelle 9 vorgesehen. Die Werkzeugmaschinenschnittstelle 9 dient zum wiederlösbaren Verbinden der Werkzeugmaschine 1 mit der Energieversorgung 5.

Die Energieversorgung 5 ist in der vorliegenden Ausführungsform als Akkumulator (auch Akku genannt) ausgestaltet. Gemäß einer alternativen und in den Figuren nicht gezeigten Ausführungsform kann die Energieversorgung 5 auch als Stromkabel zum wiederlösbaren Verbinden der Werkzeugmaschine 1 mit einer Netzstromquelle (auch Steckdose genannt) ausgestaltet sein.

Im Inneren des Gehäuses 2 der Werkzeugmaschine 1 ist des Weiteren ein Antrieb 10, eine Getriebevorrichtung 11 sowie eine Antriebswelle 12 vorgesehen.

Der Antrieb 10 ist in dem vorliegenden Ausführungsbeispiel als Elektromotor ausgestaltet und dient zum Erzeugen eines Drehmoments. Der als Elektromotor ausgestaltete Antrieb 10, die Getriebevorrichtung 11 und die Antriebswelle 12 sind dabei so zueinander in dem Gehäuse 2 der Werkzeugmaschine 1 angeordnet bzw. positioniert, dass ein von dem Antrieb 10 erzeugtes Drehmoment über die Getriebevorrichtung 11, die Antriebswelle 12 und schließlich auf die Werkzeugaufnahme 3 sowie auf das Werkzeug 6 übertragen werden kann.

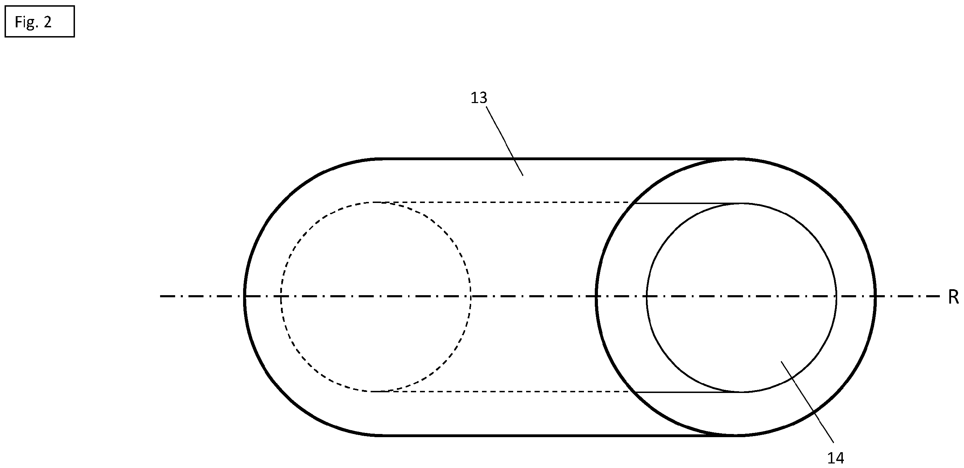

Der Antrieb 10 enthält wiederum im Wesentlichen einen zylindrischen Stator 13 und einen in dem Stator 13 positionierten und relativ zu dem Stator 13 drehbaren zylindrischen Rotor 14, vgl. Figur 2. Der Rotor 14 dreht sich dabei um eine Mittelachse MA des Stators 13.

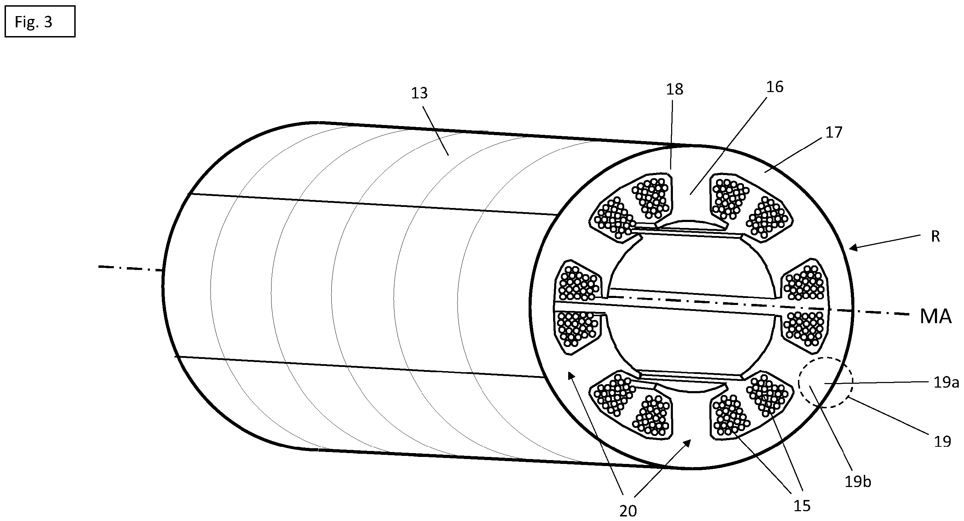

Wie in Figur 3 bis 5 ersichtlich, enthält der Stator 13 gemäß der beispielhaften Ausführungsform sechs Zahneinrichtung 20.

Gemäß alternativer Ausführungen kann der Stator 13 auch mehr oder weniger als sechs Zahneinrichtungen 20 enthalten.

Jede einzelne Zahneinrichtung 20 dient zum Aufnahme und Halten einer Spulenwicklung 15 aus einem leitfähigen Draht. Bei dem Werkstoff des leitfähigen Drahts kann es sich beispielsweise um Kupfer oder eine Kupferlegierung handeln.

Jede Zahneinrichtung 20 enthält ein Stegelement 16 sowie einen bogenförmigen ersten Ringabschnitt 17 und zweiten Ringabschnitt 18.

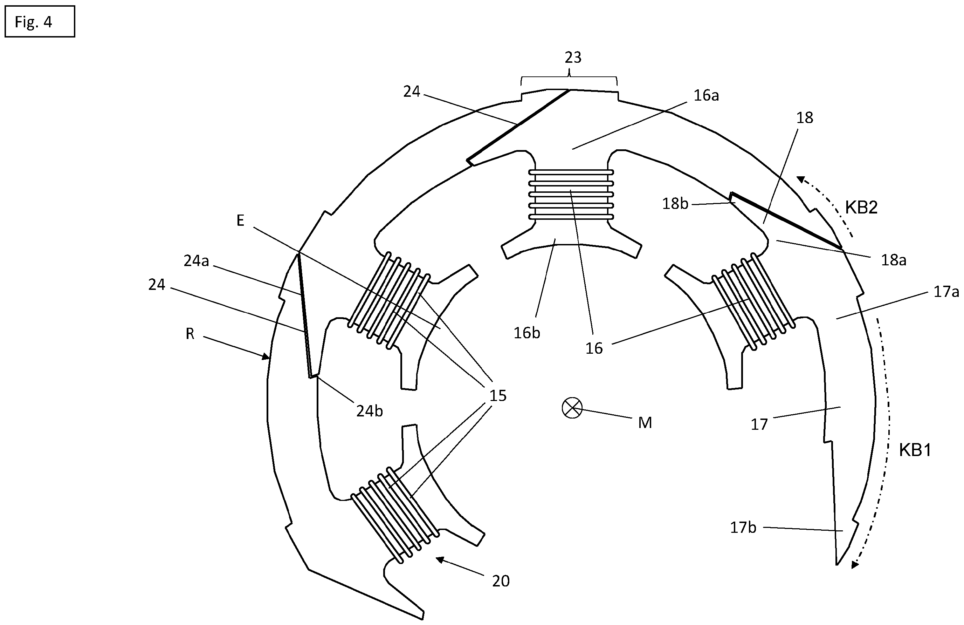

Wie in den Figuren 3 und 4 zu erkennen ist, formen die einzelnen Ringabschnitte 17, 18 in einem Zusammenschluss einen geschlossenen, kreisförmigen Ring R.

Das Stegelement 16 weist ein erstes Ende 16a und zweites Ende 16b auf, wobei zwischen dem ersten und zweiten Ende 16a, 16b die Spulenwicklung 15 angebracht wird.

Das jeweilige erste Ende 16a des Stegelements 16 ist dabei an einer Mantelinnenfläche des von den einzelnen Ringabschnitten 17, 18 entstandenen Rings R positioniert. Das zweite Ende 16b des Stegelements 16 ragt zu einem Mittelpunkt M des Rings R. Die Länge der Stegelemente 16 sind so gewählt, dass eine kreisförmige Aussparung im Innen des Stators 13 verbleibt. In diese Aussparung kann der Rotor 14 platziert werden.

Wie in den Figuren ersichtlich, weist sowohl der erste und zweite Ringabschnitt 17, 18 jeweils ein erstes und zweites Ende 17a, 17b, 18a, 18b auf.

Das erste Ende 17a des ersten Ringabschnitts 17 ist dabei an dem ersten Ende 16a des Stegelements 16 positioniert. Das erste Ende 18a des zweiten Ringabschnitts 18 ist ebenfalls an dem ersten Ende 16a des Stegelements 16 positioniert. Die beiden Ringabschnitt 17, 18 erstrecken sich in entgegengesetzte Richtungen um den Ring R.

In Figur 4 ist eine Zahneinrichtung 20 gemäß einer ersten Ausführungsform dargestellt, wobei der erste Ringabschnitt 17 einen längeren ersten Kreisbogen KB1 aufweist als der zweite Kreisbogen KB2 des zweiten Ringabschnitts 18. Mit anderen Worten: der erste Ringabschnitt 17 weist ein größeres Volumen auf als der zweite Ringabschnitt 18. In dem dargestellten Ausführungsbeispiel entspricht das Volumen des zweiten Ringabschnitts 18 im Wesentlichen 1/4 oder 25% des Volumens des ersten Ringabschnitts 17.

Darüber hinaus enthält jede Zahneinrichtung eine Verbindungsvorrichtung 19 mit einem ersten und zweiten Verbindungselement 19a, 19b. Das erste Verbindungselement 19a ist dabei an dem ersten Ringabschnitt 17 und das zweite Verbindungselement 19b ist an dem zweiten Ringabschnitt 18 positioniert.

In dem vorliegenden Ausführungsbeispiel ist die Verbindungsvorrichtung 19 als Fügeverbindung ausgestaltet. Die als Fügeverbindung ausgestaltete Verbindungsvorrichtung 19 dient dabei zum wiederlösbaren Verbinden der einzelnen Ringabschnitte 17, 18 und damit der einzelnen Zahneinrichtung 20 zu einem durchgehenden ringförmigen Stator 13.

Das erste und zweite Verbindungselement 19a, 19b ist korrespondierend keilförmig ausgestaltet, sodass in einem verbundenen Zustand eine erste schräg zu einer Zahnsegmentebene E verlaufenden Anlagefläche 21 des ersten Verbindungselements 19a an einer zweiten schräg zu der Zahnsegmentebene E verlaufenden Anlagefläche 22 des zweiten Verbindungselements 19b anliegt, vgl. Figur 4. Durch das Verbinden des ersten Verbindungselements 19a mit dem zweiten Verbindungselement 19b werden der erste und zweite Ringabschnitt 17, 18 miteinander verbunden.

Wenn das erste und zweite Verbindungselement 19a, 19b miteinander verbunden sind, verläuft eine Verbindungsfläche 24 zwischen der ersten und zweiten Anlagefläche 21, 22 schräg zu der Zahnsegmentebene E.

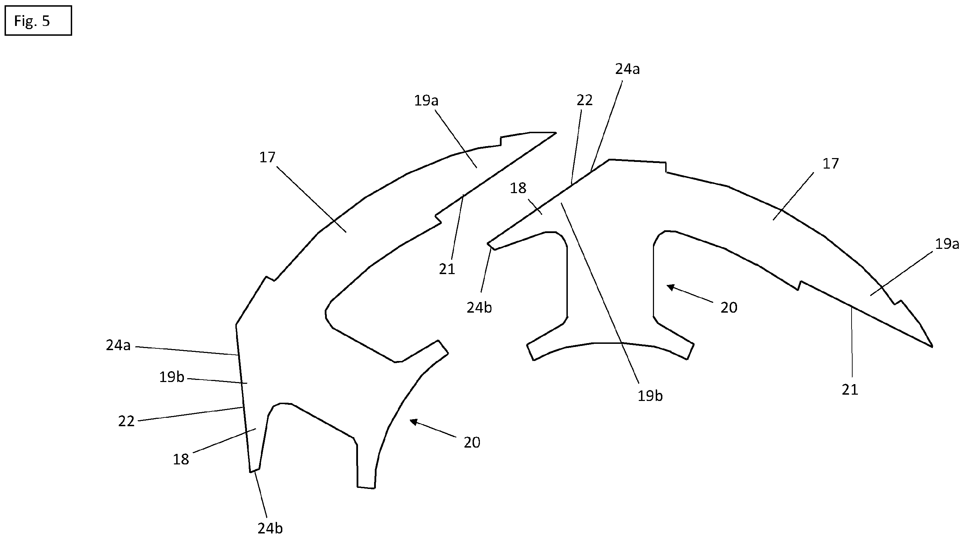

Wie in Figur 4 und 5 gezeigt weist die Verbindungsfläche 24 sowohl einen ersten schräg zu der Zahnsegmentebene E verlaufenden Abschnitt 24a als auch einen zweiten im Wesentlichen radial verlaufenden Abschnitt 24b aufweist.

Darüber hinaus weist das erste und zweite Verbindungselement 19a, 19b jeweils eine Erhebung 23 auf. Jede Erhebung 23 erstreckt sich dabei in radiale Richtung bzw. von der äußeren Mantelfläche des Stators 13 nach außen.

Die Erhebung 23 an dem ersten und zweiten Verbindungselement 19a, 19b weisen einen im Wesentlichen gleich langen Kreisbogen auf.

Wenn das erste und zweite Verbindungselement 19a, 19b miteinander verbunden sind, ergänzen sich die beiden Erhebungen 23 zu einer im Wesentlichen durchgehenden Erhebung an der äußeren Mantelfläche des Stators 13, wobei diese durchgehende Erhebung 23 eine im Wesentlichen rechteckige Querschnittsfläche aufweist.

Die durchgehende Erhebung 23 an der äußeren Mantelfläche des Stators 13 dient zur korrekten Orientierung bzw. Ausrichtung des Stators 13 bei der Montage eines Stator 13 zu einem Antrieb 10 einer Werkzeugmaschine 1.

Darüber hinaus kann eine Schweiß- oder Klebeverbindung an der Erhebung 23 aufgetragen werden.

### Bezugszeichen

- 1: Werkzeugmaschine
- 2: Gehäuse der Werkzeugmaschine
- 2a: Oberseite des Gehäuses der Werkzeugmaschine
- 2b: Unterseite des Gehäuses der Werkzeugmaschine
- 2c: vorderes Ende des Gehäuses der Werkzeugmaschine
- 2d: hinteres Ende des Gehäuses der Werkzeugmaschine
- 3: Werkzeugaufnahme
- 4: Handgriff
- 4a: oberes Ende des Handgriffs
- 4b: unteres Ende des Handgriffs
- 4c: Vorderseite des Handgriffs
- 4d: Rückseite des Handgriffs
- 5: Energieversorgung
- 6: Werkzeug
- 7: Betätigungsschalter
- 8: Steuerungseinrichtung
- 9: Werkzeugmaschinenschnittstelle
- 10: Antrieb
- 11: Getriebevorrichtung
- 12: Antriebswelle
- 13: Stator
- 14: Rotor
- 15: Spulenwicklung
- 16: Stegelement
- 16a: erstes Ende des Stegelements
- 16b: zweites Ende des Stegelements
- 17: erster Ringabschnitt
- 17a: erstes Ende des ersten Ringabschnitts
- 17b: zweites Ende des ersten Ringabschnitts
- 18: zweiter Ringabschnitt
- 18a: erstes Ende des zweiten Ringabschnitts
- 18b: zweites Ende des zweiten Ringabschnitts
- 19: Verbindungsvorrichtung
- 19a: erstes Verbindungselement
- 19b: zweites Verbindungselement
- 20: Zahneinrichtung
- 21: erste Anlagefläche
- 22: zweite Anlagefläche
- 23: Erhebung
- 24: Verbindungsfläche
- 24a: erster Abschnitt der Verbindungsfläche
- 24b: zweiter Abschnitt der Verbindungsfläche

- E: Zahnsegmentebene
- M: Mittelpunkt
- MA: Mittelachse
- R: kreisförmiger Ring
- VS: Verbindungsstelle
- KB1: erster Kreisbogen
- KB2: zweiter Kreisbogen
- VL: Verbindungslinie

## Patentansprüche

1. Stator (13) für einen Elektromotor, insbesondere als Antrieb (10) für eine Werkzeugmaschine (1), enthaltend wenigstens eine erste und zweite Zahneinrichtung (20) mit jeweils einem radial angeordneten Stegelement (16) zur Aufnahme einer Spulenwicklung (15),
**dadurch gekennzeichnet, dass** jede Zahneinrichtung (20) einen bogenförmigen Ringabschnitt (17, 18) und eine Verbindungsvorrichtung (19) mit einem ersten und zweiten Verbindungselement (19a, 19b) enthält, wobei das erste und zweite Verbindungselement (19a, 19b) korrespondierend keilförmig ausgestaltet sind, sodass in einem verbundenen Zustand eine erste schräg zu einer Zahnsegmentebene (E) verlaufenden Anlagefläche (21, 22) des ersten Verbindungselements (19a) an einer zweiten schräg zu der Zahnsegmentebene (E) verlaufenden Anlagefläche (21, 22) des zweiten Verbindungselements (19b) anliegt.

2. Stator (13) nach Anspruch 1,
**dadurch gekennzeichnet, dass** das erste und zweite Verbindungselement (19a, 19b) so ausgestaltet sind, dass eine Verbindungsfläche (24) sowohl einen schräg zu der Zahnsegmentebene (E) verlaufenden Abschnitt (24a) als auch radial verlaufenden Abschnitt (24b) aufweist.

3. Stator (13) nach Anspruch 2,
**dadurch gekennzeichnet, dass** der schräg zu der Zahnsegmentebene (E) verlaufende Abschnitt (24a) länger ist als der radial verlaufende Abschnitt (24b) ist.

4. Stator (13) nach Anspruch 2 oder 3,
**dadurch gekennzeichnet, dass** das erste und zweite Verbindungselement (19a, 19b) so ausgestaltet ist, dass das erste und zweite Verbindungselement (19a, 19b) in einem verbundenen Zustand an einem radial nach außen ragenden Ende der Verbindungsfläche (24) stoffschlüssig verbindbar sind.

5. Stator (13) nach Anspruch 4,
**dadurch gekennzeichnet, dass** die stoffschlüssige Verbindung zwischen dem ersten und zweiten Verbindungselement (19a, 19b) in Form einer Schweißverbindung ausgestaltet sind.
